# EUROPEAN PATENT APPLICATION

(11) **EP 2 325 740 A2**
(43) Date of publication of application: **25.05.2011**
(21) Application number: 10189287.5
(22) Date of filing: 28.10.2010
(51) Int. Cl.: G06F 3/048

(54) **User interface apparatus and method**

(30) Priority: 30.10.2009 KR 20090103940
(71) Applicant: Pantech Co., Ltd., Seoul 121-270 (KR)
(72) Inventor: Seok, Man Ho, Gyeonggi-do 412-220 (KR); Kim, Young Wook, Seoul 157-222 (KR); Lee, Ju Sik, Seoul 132-040 (KR); Lee, Hak Lim, Seoul 157-040 (KR); Jang, Chul Ho, Seoul 121-781 (KR)
(74) Representative: Herzog, Markus

(57) **Abstract**

A user interface apparatus may include a display unit to display a screen according to an application, a touch sensor to generate a touch signal if a touch is sensed on the display unit, a pressure sensor to generate a push signal if a push is sensed on the display unit, and an interface unit to determine an input according to the touch signal and the push signal, and to perform an operation of the application corresponding to the determined input.

## Description

### CROSS-REFERENCE TO RELATED APPLICATION

This application claims priority from and the benefit of Korean Patent Application No. 10-2009-0103940, filed on October 30, 2009, which is hereby incorporated by reference for all purposes as if fully set forth herein.

### BACKGROUND

### 1. Field

Exemplary embodiments of the present invention relate to a user interface apparatus and method.

### 2. Discussion of the Background

A user interface form has been developed in which various functions are executed based on a touch input of a user. A conventional touch input method may include assigning a function corresponding to a number of touches, such as a single touch, a double touch, and the like, and may include assigning a function corresponding to a touch time, such as a short touch, a long touch, and the like. Also, the conventional touch input method may include assigning a function corresponding to multiple simultaneous touches, such two simultaneously input touches.

A conventional touch input method may be classified into an operation using a touch, and an operation without using the touch. The conventional touch input scheme may expand functionality using an input method, such as a double touch, a long touch, and the like. However, if a number of touches increases and the double touch is performed, each touch of the double touch may not occur in the same location. Further, an input delay may occur in association with the long touch.

### SUMMARY

Exemplary embodiments of the present invention provide a user interface apparatus and method using a touch and a push in a portable device.

Exemplary embodiments of the present invention also provide a user interface apparatus and method in which a touch and a push may be sensed in a portable device and an operation corresponding to a combination of the touch and the push may be performed.

Additional features of the invention will be set forth in the description which follows, and in part will be apparent from the description, or may be learned by practice of the invention.

An exemplary embodiment of the present invention discloses a user interface apparatus including a display unit to display a screen according to an application; a touch sensor to generate a touch signal if a touch is sensed on the display unit; a pressure sensor to generate a push signal if a push is sensed on the display unit; and an interface unit to determine an input according to the touch signal only, a push signal only, or a touch signal and the push signal, and to perform an operation of the application corresponding to the determined input.

An exemplary embodiment of the present invention discloses a method for a user interface, including displaying an output screen according to an application; determining an input according to a touch signal only, a push signal only, or a touch signal and a push signal sensed on a touch screen; and performing an operation of the application corresponding to the determined input.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a block diagram illustrating a configuration of a user interface apparatus according to an exemplary embodiment of the present invention.

FIG. 2 is a flowchart illustrating a method for a user interface according to an exemplary embodiment of the present invention.

FIG. 3 is a diagram illustrating copying or moving a text according to an exemplary embodiment of the present invention.

FIG. 4A and FIG. 4B are diagrams illustrating examples of inputting gestures according to exemplary embodiments of the present invention.

FIG. 5 is a diagram illustrating an example of selecting icons according to an exemplary embodiment of the present invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements.

It will be understood that when an element is referred to as being "connected to" another element, it can be directly connected to the other element, or intervening elements may be present. The phrase, "at least one of A, B, and C" may be satisfied by A only, B only, C only, or any partial or full combination of A, B, and C.

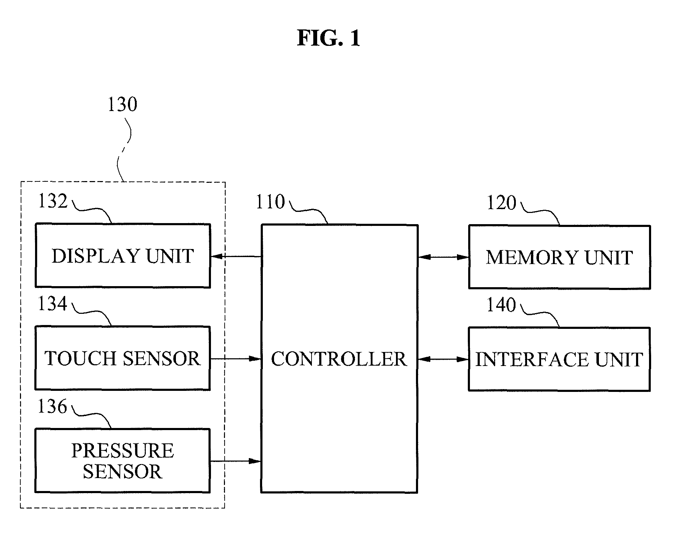

According to an exemplary embodiment of the present invention, a user interface apparatus and method may sense a touch and a push in a portable device and perform an operation corresponding to a combination of the touch and the push. Hereinafter, the user interface apparatus will be described with reference to FIG. 1.

FIG. 1 is a block diagram illustrating a configuration of a user interface apparatus according to an exemplary embodiment of the present invention. Referring to FIG. 1, the user interface apparatus may include a controller 110, a memory unit 120, a touch screen 130, and an interface unit 140.

The memory unit 120 may temporarily store data occurring while the user interface apparatus is being operated, and may also store storage data, an application program, and a program for controlling general operations of the user interface apparatus and the like.

The touch screen 130 may include a display unit 132, a touch sensor 134, and a pressure sensor 136. The display unit 132 may display status information or an indicator, numbers, characters, a motion picture, a still picture, and the like. The display unit 132 may include a Liquid Crystal Display (LCD), an inorganic or organic light emitting diode (LED) display, and the like.

The touch sensor 134 and the pressure sensor 136 correspond to object-oriented input units. The touch sensor 134 includes a device that may sense a contact if a user touches a portion of a screen using the user's finger, a pen, and the like. The touch sensor 134 may recognize the touched portion to cause a touch signal. The pressure sensor 136 includes a device that may sense a push causing pressurization if the user pushes the portion at a pressure greater than or equal to a reference value on the screen using the user's finger, the pen, and the like. The pressure sensor 136 may recognize the pushed portion to cause a push signal.

The touch sensor 134 and the pressure sensor 136 are provided on the display unit 132, and are formed of a transparent material. Accordingly, a screen displayed by the display unit 132 may be viewed by the user.

The touch sensor 134 and the pressure sensor 136 may be separately provided, or may be provided as a single device. For ease of description, the touch sensor 134 and the pressure sensor 136 are separately illustrated in FIG. 1.

The interface unit 140 may receive a touch signal and a push signal according to sensing operations of the touch sensor 134 and the pressure sensor 136, and may perform an operation corresponding to an input according to the touch signal and the push signal according to an executing application. Operations corresponding to inputs according to various applications will be further described later.

The input according to the touch signal and the push signal may correspond to one of a touch input, a touch drag input, a touch cancel input, a push input, a push drag input, a push cancel input, and a simultaneous touch and push cancel input. The input recognized by the interface unit 140 may correspond to an input combined with a previous input.

Among inputs recognized by the interface unit 140, a push may be performed after a touch is performed. The push may be input while the touch is being input or together with the touch.

The controller 110 may control general operations of the user interface apparatus and execute the application program. The controller 110 may control the interface unit 140. Specifically, the controller 110 may perform functions of the interface unit 110. For ease of description, the controller 110 and the interface unit 140 are separately illustrated in FIG. 1; however, the interface unit 140 and the controller 130 may be provided as a single device.

Hereinafter, a user interface method that may sense a touch and a push in a portable device and perform an operation corresponding to a combination of the touch and the push will be described.

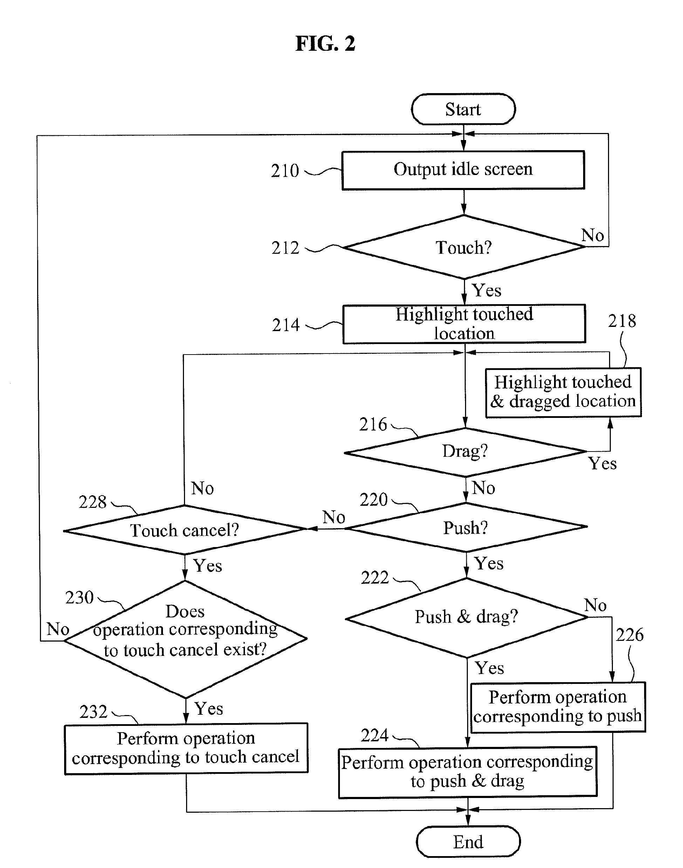

FIG. 2 is a flowchart illustrating a method for a user interface according to an exemplary embodiment of the present invention. The user interface method may be performed by the user interface apparatus of FIG. 1.

In operation 210, if an application is executed, the user interface apparatus may output an idle screen of the application. In operation 212, the user interface apparatus may determine whether a touch is sensed on the touch screen 130.

If the touch is sensed in operation 212, the user interface apparatus may highlight a touched location in operation 214 and enter a touched state. For example, the user interface apparatus may highlight an icon or a text according to an application, or may move or generate a cursor.

In operation 216, the user interface apparatus may determine whether a drag is sensed in a touched state on the touch screen 130. If the drag is sensed in the touched state in operation 216, the user interface apparatus may highlight a touched and dragged location.

If the drag is not sensed in the touched state in operation 216, the user interface apparatus may determine whether the push is sensed on the touch screen in operation 220. If the push is sensed, the user interface apparatus may determine whether a push drag is sensed, i.e., whether a drag is sensed in a pushed state in operation 222. If the push drag is sensed in operation 222, the user interface apparatus may perform an operation of the application corresponding to the push drag in operation 224. If the push drag is not sensed in operation 222, the user interface apparatus may perform an operation of the application corresponding to the push in operation 226.

If the push is not sensed in operation 220, the user interface apparatus may determine whether a touch cancel is input, i.e., whether the touch is cancelled in operation 228. If the touch is not cancelled in operation 228, the user interface apparatus may return to operation 216. If the touch is cancelled in operation 228, the user interface apparatus may determine whether an operation of the application corresponding to the touch cancel exists in operation 230. If the operation of the application corresponding to the touch cancel is determined to not exist in operation 230, the user interface apparatus may return to operation 210. If the operation of the application corresponding to the touch cancel is determined to exist in operation 230, the user interface apparatus may perform the operation of the application corresponding to the touch cancel in operation 232.

Hereinafter, the user interface apparatus and method according to an exemplary embodiment of the present invention will be described with reference to the following tables.

If an application corresponds to a menu application in which a menu is provided, the interface unit 140 may perform operations as shown in Table 1 below with respect to an input of the touch sensor 134 and the pressure sensor 136.

**[Table 1]**

| Input Type | Operation | |
|---|---|---|
| No input | - | Display a menu or a sub-menu in an input standby state |
| Touch input | - | Highlight a character or an icon corresponding to a touched location |
| Touch drag input | - | Highlight a character or an icon corresponding to a touched and dragged location |
| Push input | - | enter a sub-menu, or execute an application corresponding to a character or an icon of a pushed location |
| Touch cancel input without push input after | - | Return to an input standby state to display a menu or a sub-menu corresponding to no input |
| touch | - | Move to an upper menu and display the upper menu in the input standby state if the upper menu exists and an application is set to be switched to the upper menu |

If the menu application is applied to the user interface apparatus, a user may select a desired icon by touching the touch screen 130, and execute the selected icon in a state in which the touch is not cancelled.

If the application corresponds to a character capture application to copy and/or to cut a character or object, the interface unit 140 may perform operations as shown in Table 2 below with respect to the input of the touch sensor 134 and the pressure sensor 136.

**[Table 2]**

| Input Type | Operation | |
|---|---|---|
| No input | - | Character input standby state |
| Touch input | - | Display a cursor in a touched location |
| Touch drag input | - | Display a cursor in a touched and dragged location |
| Push input | - | Perform a pushed function if one of functions included in a popup menu, for example, copy, cut, and cancel, is pushed |
| | - | Paste a captured character in a pushed location if the captured character is stored in a memory |
| Push drag input | - | Capture, in a memory, characters corresponding to an area from a start location of a push to an end location of a push drag |
| Push cancel input | - | Display a popup menu having functions of, for example, cut, copy, paste, and cancel |
| Touch cancel input without push input after touch | - | Output a cursor in a touch canceled location and wait for a character input |

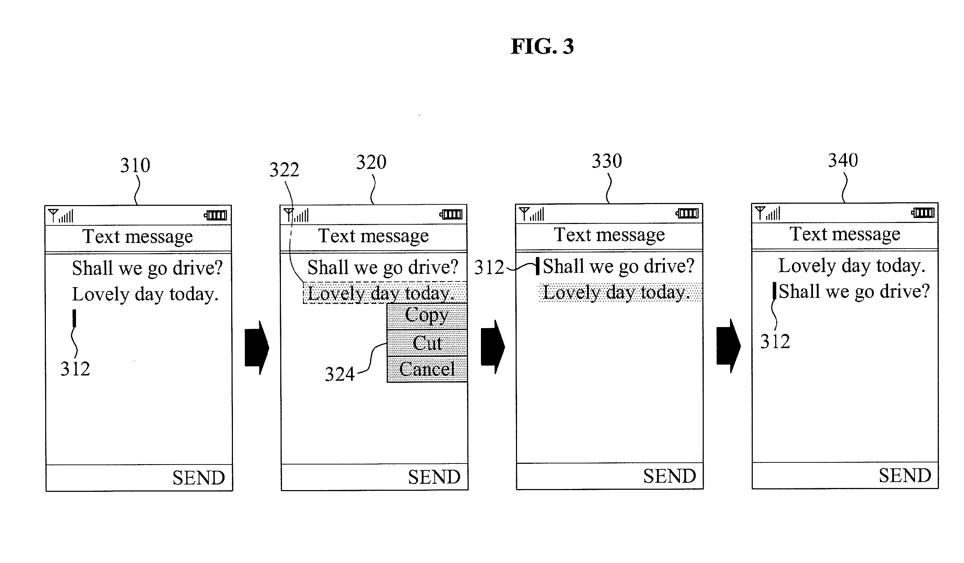

If the character capture application is applied to the user interface apparatus, the user may perform an operation as shown in FIG. 3 without cancelling the touch on the touch screen 130.

FIG. 3 is a diagram illustrating copying or moving a text according to an exemplary embodiment of the present invention. Referring to FIG. 3, in operation 310, the interface unit 140 may display a text received from a character message application, and may wait for a character input. In operation 320, the interface unit 140 may receive a selection area 322, "Lovely day today", according to a push drag input. If a push cancel input is received, the interface unit 140 may display a popup menu 324 having functions of, for example, copy, cut, and cancel. If a cut function of the popup menu 324 is selected via a push input, the interface unit 140 may store the selection area 322 in the memory unit 120.

If the interface unit 140 receives the touch drag input, the interface unit 140 may change a location of a cursor 312 in operation 330. In operation 340, if a push input is received in a state in which the captured text is stored in the memory unit 120, the interface unit 140 may display the captured text in the location of the cursor 312 using the cut function, and delete the captured selection area 322 using the cut function, i.e., the interface unit 140 may paste the cut text in the location of the cursor 312.

If the application corresponds to an Internet browser application providing an Internet browser, the interface unit 140 may perform operations as shown in Table 3 below with respect to the input of the touch sensor 134 and the pressure sensor 136.

**[Table 3]**

| Input Type | Operation | |
|---|---|---|
| No input | - | Display an Internet browser in an input standby state |
| Touch input | - | Highlight a character or an icon corresponding to a touched location |
| Touch drag input | - | Highlight a character or an icon corresponding to a touched and dragged location |
| Push input | - | move to a linked site, or execute an application corresponding to a character or an icon of a pushed location |
| Touch cancel input without push input after touch | - | Display an Internet browser in an input standby state |

If the Internet browser application is applied to the user interface apparatus, the user may select a desired icon using a touch, and may execute the selected icon in a state in which the touch is not cancelled. The Internet browser application may also provide text capturing described above with reference to Table 2 above.

If the application corresponds to a viewer application providing, for example, an image search or a subway line search, the interface unit 140 may perform operations as shown in Table 4 below with respect to the input of the touch sensor 134 and the pressure sensor 136.

**[Table 4]**

| Input Type | Operation | |
|---|---|---|
| No input | - | Display a thumbnail image or a subway line in an input standby state |
| Touch input | - | Highlight a thumbnail image or a subway line corresponding to a touched location |
| Touch drag input | - | Highlight a thumbnail image or a subway line corresponding to a touched and dragged location |
| Push input | - | Display, on a screen, an image corresponding to a thumbnail image located at a pushed location |
| | - | Select a subway station or a subway line corresponding to the pushed location |
| Push drag input | - | Move an image into a pushed and dragged direction by a pushed and dragged distance if an outputting image is greater than the entire screen |
| Push cancel input | - | Display information associated with the selected subway station or subway line |
| Touch cancel input without push input after touch | - | Return to an input standby state |

If the viewer application is applied to the user interface apparatus, the user may select, using a touch and a push, a desired thumbnail image or subway station. Specifically, the user may select the desired thumbnail image or subway station by pushing the desired thumbnail image or subway station in a state in which the touch is not cancelled.

If the application corresponds to a picture board application providing a function of drawing a picture, the interface unit 140 may perform operations as shown in Table 5 below with respect to the input of the touch sensor 134 and the pressure sensor 136.

**[Table 5]**

| Input Type | Operation | |
|---|---|---|
| No input | - | Input standby state |
| Touch input | - | Display a picture start point on a touched location |
| Touch drag input | - | Display a picture start point on a touched and dragged location |
| Push input | - | Perform a function of a sub-menu corresponding a pushed location among functions included in the sub-menu such as a line color, a line thickness, etc. |
| Push drag input | - | Display a picture drawn along a pushed and dragged locus |
| Push cancel input | - | Return to an input standby state |
| | - | Display a sub-menu having functions of selecting a line color, a line thickness, etc. |

If the picture board application is applied to the user interface apparatus, the user may determine a location of drawing a picture by touching the touch screen 130.

If the application corresponds to a touch keypad application providing a character or number input via a displayed touch keypad, the interface unit 140 may perform operations as shown in Table 6 below with respect to the input of the touch sensor 134 and the pressure sensor 136.

**[Table 6]**

| Input Type | Operation | |
|---|---|---|
| No input | - | Display a character or number keypad in an input standby state |
| Touch input | - | Highlight a character button or a number button corresponding to a touched location |
| Touch drag input | - | Highlight a character button or a number button corresponding to a touched and dragged location |
| Push input | - | Input, into a pushed location, a character or a number corresponding to the character button or the number button |
| Touch cancel input | - | Return to an input standby state |
| without push input after touch | - | Execute a predetermined sub-menu |

If the touch keypad application is applied to the user interface apparatus, the user may select, using a touch, a desired key button of the displayed keypad, and may input a desired character or number using a push in a state in which the touch is not cancelled.

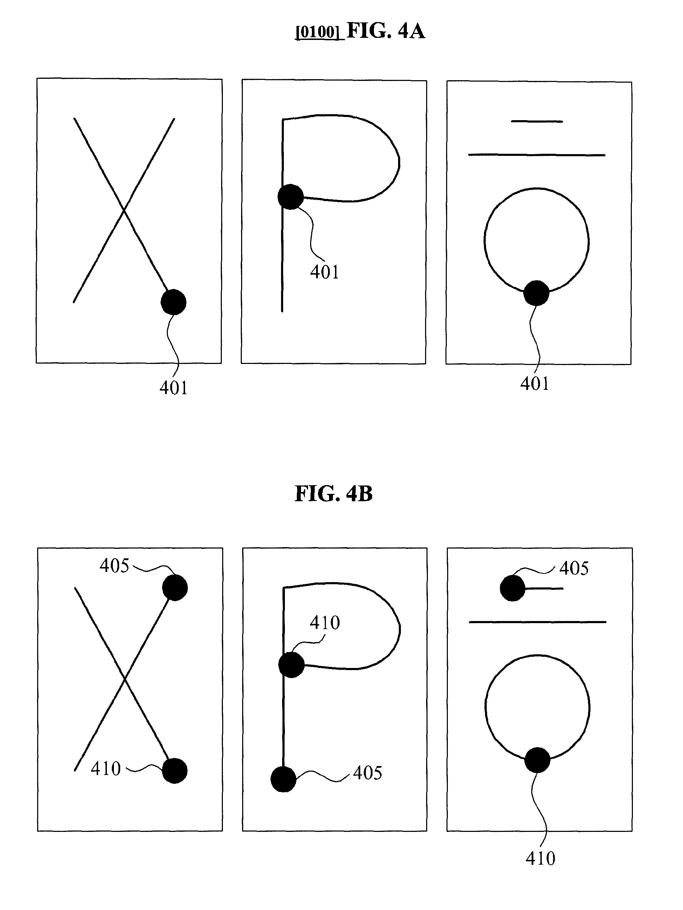

If the application corresponds to a gesture application through which a gesture may be received, the interface unit 140 may receive the gesture according to the input of the touch sensor 134 and the touch sensor 136, as shown in FIGS. 4A and 4B.

FIG. 4A and FIG. 4B are diagrams illustrating examples of inputting gestures according to exemplary embodiments of the present invention.

Referring to FIG. 4A, a form of the gesture may be input using a touch drag, and an input of the gesture may be completed using a push 401. Referring to FIG. 4B, a start of the gesture 405 and an end of the gesture 410 may be input using the push, and the form of the gesture may be input using a touch drag.

If the gesture application is applied to the user interface apparatus, the user may recognize even a gesture formed of discontinuous lines on the touch screen 130. Specifically, there is no particular limit on the form of the gesture.

If the application corresponds to a window searcher application providing a function of selecting a plurality of icons, the interface unit 140 may perform operations as shown in Table 7 below with respect to the input of the touch sensor 134 and the input of the pressure sensor 136.

**[Table 7]**

| Input Type | Operation | |
|---|---|---|
| No input | - | Input standby state |
| Touch input | - | Highlight an icon corresponding to a touched location, or display a pointer |
| Touch drag input | - | Highlight an icon corresponding to a touched and dragged location, or display a pointer |
| Push input | - | Perform a pushed function if one of functions included in a popup menu, for example, copy, cut, execute, and, property, is pushed |
| | - | Paste a captured icon to a pushed location if the captured icon is stored in a memory |
| Push drag input | - | Select icons included in an area from a start location of a push to an end location of a push drag |
| Push cancel input | - | Display a popup menu having functions of copy, cut, execute, and property |

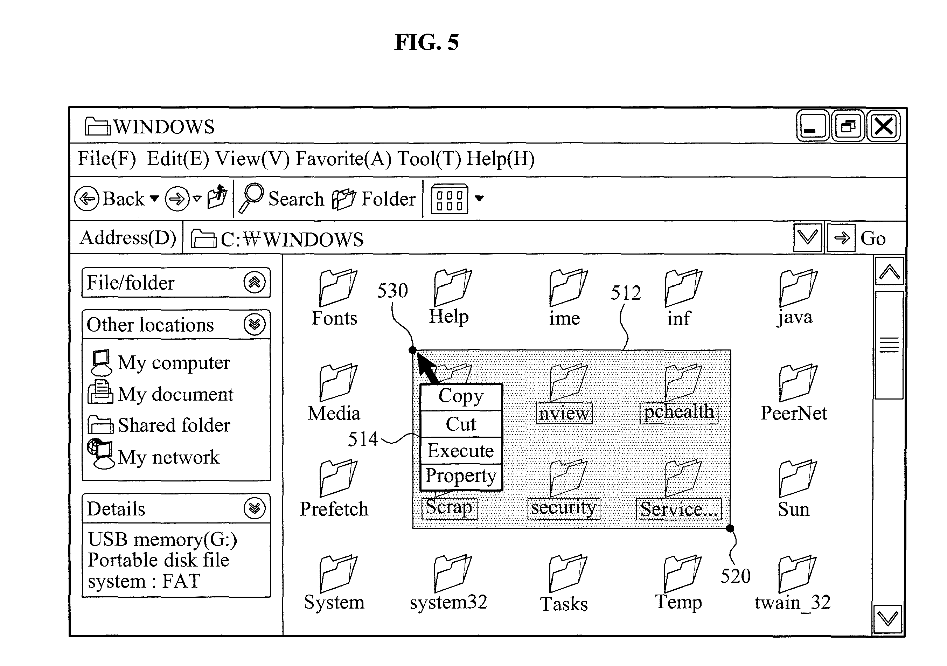

If the window searcher application is applied to the user interface apparatus, the user may execute a plurality of icons as shown in FIG. 5 without cancelling a touch on the touch screen 130. Specifically, the user interface apparatus enables the user to easily select the plurality of icons.

FIG. 5 is a diagram illustrating an example of selecting icons according to an exemplary embodiment of the present invention. Referring to FIG. 5, if a window searcher application is executed, the interface unit 140 may store, in the memory unit 120, a selection area 512 from a start point 520 of a push to an end point 530 of the push. If the push is ended, a popup menu 514 having functions of, for example, copy, cut, execute, and property may be displayed. The popup menu 514 may be displayed near or adjacent to the end point 530.

The interface unit 140 may map the input of the touch sensor 134 and the pressure sensor 136 with a function of a mouse and thereby use the input as the mouse. For example, the interface unit 140 may map a touch with a pointer indication of the mouse and may also map a touch drag with a drag of the mouse. In addition, the user interface unit 140 may map a push with a left button of the mouse and may map a push drag with a drag function of the mouse.

The exemplary embodiments according to the present invention may be recorded in computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts. Examples of computer-readable media include magnetic media such as hard disks, floppy disks, and magnetic tape; optical media such as CD ROM disks and DVD; magneto-optical media such as floptical disks; and hardware devices that are specially configured to store and perform program instructions, such as read-only memory (ROM), random access memory (RAM), flash memory, and the like, and combinations thereof. Examples of program instructions include both machine code, such as produced by a compiler, and files containing higher level code that may be executed by the computer using an interpreter. The described hardware devices may be configured to act as one or more software modules in order to perform the operations of the above-described embodiments of the present invention.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A user interface apparatus, comprising:
a display unit to display a screen according to an application;
a touch sensor to generate a touch signal if a touch is sensed on the display unit;
a pressure sensor to generate a push signal if a push is sensed on the display unit; and
an interface unit to determine an input according to the touch signal only, the push signal only, or the touch signal and the push signal, and to perform an operation of the application corresponding to the determined input.

2. The user interface apparatus of claim 1, wherein push comprises a push on a portion of the screen at a pressure greater than or equal to a reference value.

3. The user interface apparatus of claim 1 or 2, wherein the determined input comprises at least one of a touch input, a touch drag input, a touch cancel input, a push input, a push drag input, a push cancel input, and a simultaneous touch and push cancel input.

4. The user interface apparatus of any of claims 1 to 3, wherein the interface unit performs the operation of the application using a combination of a first determined input and a second determined input.

5. The user interface apparatus of any of claims 1 to 4, wherein:
the application comprises a menu application through which a menu is provided, and
if the determined input corresponds to a touch input, the interface unit highlights a character or an icon corresponding to a touched location, and
if the determined input corresponds to a push input, the interface unit enters a sub-menu or executes an application corresponding to a character or an icon of a pushed location.

6. The user interface apparatus of any of claims 1 to 5, wherein:
the application comprises a character capture application, and
if the determined input corresponds to a touch input, the interface unit displays a cursor on a touched location,
if the determined input corresponds to a push drag input, the interface unit stores characters corresponding to an area from a start location of the push to an end location of the push,
if the determined input corresponds to a push cancel input, the interface unit displays a popup menu comprises at least one of functions of copy, cut, and cancel,
if the determined input corresponds to a push input and a pushed location corresponds to one of the functions included in the popup menu, the interface unit performs a pushed function, and
if the determined input corresponds to the push input and the stored characters exist, the interface unit pastes the stored characters in the pushed location.

7. The user interface apparatus of any of claims 1 to 6, wherein:
the application comprises an Internet browser application, and
if the determined input corresponds to a touch input, the interface unit highlights a character or an icon corresponding to a touched location, and
if the determined input corresponds to a push input, the interface unit executes a link corresponding to a pushed location, or executes an application corresponding to a character or an icon of the pushed location.

8. The user interface apparatus of any of claims 1 to 7, wherein the application comprises an image viewer application, and if the determined input corresponds to a touch input, the interface unit highlights a thumbnail image corresponding to a touched location, if the determined input corresponds to a push input, the interface unit displays, on the screen, an image corresponding to a thumbnail image located at a pushed location, if the determined input corresponds to a touch cancel input without the push input being sensed after the touch and the image is being output on the entire screen, the interface unit increases or decreases a size of the image, and if the determined input corresponds to a push drag and the size of the image being output is greater than the screen, the interface unit moves the image into a pushed and dragged direction by a pushed and dragged distance, and/or,
Wherein the application comprises a subway line viewer application, and if the determined input corresponds to a touch input, the interface unit highlights a subway line or a subway station corresponding to a touched location, if the determined input corresponds to a push input, the interface unit selects a subway line or a subway station corresponding to a pushed location, and if the determined input corresponds to a push cancel input, the interface unit displays information associated with the selected subway line or the selected subway station.

9. The user interface apparatus of any of claims 1 to 8, wherein:
the application comprises a picture board application to draw a picture, and
if the determined input corresponds to a touch input, the interface unit displays a picture start point on a touched location,
if the determined input corresponds to a push drag input, the interface unit displays the picture drawn along a pushed and dragged location,
if the determined input corresponds to a push cancel input, the interface unit returns to an input standby state, or displays a sub-menu comprising at least one of functions of selecting a line color and a line thickness of the drawn picture,
if the determined input corresponds to a push input and one of the functions included in the sub-menu is selected, the interface unit performs the selected function.

10. The user interface apparatus of any of claims 1 to 9, wherein:
the application comprises a touch keypad application to input a character or a number via a displayed touch keypad, and
if the determined input corresponds to a touch input, the interface unit highlights a key button of the displayed touch keypad corresponding to a touched location, and
if the determined input corresponds to a push input, the interface unit inputs, into a pushed location, the character or the number corresponding to the key button of the touch keypad.

11. The user interface apparatus of any of claims 1 to 10, wherein:
the application comprises a window searcher application, and
if the determined input corresponds to a touch input, the interface unit highlights an icon corresponding to a touched location or displays a pointer,
if the determined input corresponds to a push drag input, the interface unit selects icons included in an area from a start location of the push to an end location of the push,
if the determined input corresponds to a push cancel input, the interface unit displays a popup menu comprising functions of copy, cut, execute, and property,
if the determined input corresponds to a push input and one of the functions included in the popup menu is pushed, the interface unit performs a function of a pushed location with respect to the selected icons, and
if the determined input corresponds to the push input, and a copied selected icon or a cut selected icon exists, the interface unit pastes the selected icons in the pushed location.

12. The user interface apparatus of any of claims 1 to 11, wherein the application comprises a gesture application in which a gesture is received using the touch, and if the determined input corresponds to a touch drag input, the interface unit stores a touched and dragged location in a gesture form, and if the determined input corresponds to a push input, the interface unit determines, as the gesture, the gesture form stored until the push input occurs, and/or,
wherein the application comprises a gesture application in which a gesture is received using the touch, and if the determined input corresponds to a push input and a gesture form stored until the push input occurs does not exist, the interface unit determines a corresponding first push input as an input start of the gesture, if the determined input corresponds to a touch drag input and an input of the gesture starts, the interface unit stores a touched and dragged location in a gesture form, and if the determined input corresponds to the push input and the stored gesture form exists, the interface unit determines, as the gesture, a touched and dragged location input between a first push input and a second push input.

13. The user interface apparatus of any of claims 1 to 12, wherein the interface unit maps the input according to the touch signal and the push signal as a mouse and uses the mapped input as an operation of the mouse.

14. A method for a user interface, the method comprising:
displaying an output screen according to an application;
determining an input according to a touch signal only, a push signal only, or a touch signal and a push signal sensed on a touch screen; and
performing an operation of the application corresponding to the determined input.

15. The method of claim 14, wherein the determined input comprises at least one of a touch input, a touch drag input, a touch cancel input, a push input, a push drag input, a push cancel input, and a simultaneous touch and push cancel input, and/or,
wherein the performing comprises performing the operation of the application using a combination of a first determined input and a second determined input, and/or, wherein the performing comprises performing the operation of the application by mapping the input according to the touch signal and the push signal as a mouse.
